# EUROPÄISCHE PATENTANMELDUNG

(11) **EP 1 365 459 A2**
(43) Veröffentlichungstag der Anmeldung: **26.11.2003**
(21) Anmeldenummer: 03005381.3
(22) Anmeldetag: 13.03.2003
(51) Int. Cl.: H01M 2/02, H01M 2/04

(54) **Galvanisches Element**

(30) Priorität: 27.03.2002 DE 10213686
(71) Anmelder: VARTA Microbattery GmbH, 30419 Hannover (DE)
(72) Erfinder: Braunger, Eugen, 73457 Essingen (DE); Holl, Konrad, Dr., 73434 Aalen-Dewangen (DE); Kreidler, Bernd, 73479 Ellwangen (DE); Ilic, Dejan, Dr., 73479 Ellwangen (DE)
(74) Vertreter: Patentanwälte Ruff, Wilhelm, Beier, Dauster & Partner

(57) **Zusammenfassung**

Bei einem galvanischen Element mit alkalischem Elektrolyten und negativer Zinkelektrode in einem Gehäuse in Form einer Knopfzelle ist zumindest die Außenfläche des Zellendeckels mit einer nickelfreien Cu/Sn-Legierung oder mit einer nickelfreien Cu/Sn/Zn-Legierung beschichtet. Die Legierung enthält 20 % bis 90 % Cu, insbesondere 50 % bis 60 % Cu, Rest Sn oder 50 % bis 60 % Cu, 25 % bis 35 % Sn, Rest Zn.

## Beschreibung

Gegenstand der Erfindung ist ein galvanisches Element mit alkalischem Elektrolyten und negativer Zinkelektrode in einem Gehäuse in Form einer Knopfzelle.

Galvanische Elemente mit alkalischem Elektrolyten in Knopfzellenform enthalten als negative Elektrode im Allgemeinen ein Gel aus Zinkpulver. Als positive Elektroden enthalten sie im Falle der so genannten Zink/Luftzelle eine Gasdiffusionselektrode oder bei dicht verschlossenen Knopfzellen beispielsweise Manganoxide oder Silberoxide als aktive Massen.

Bei diesen Knopfzellen ist es allgemein üblich, den aus Stahl oder Edelstahl bestehenden Behälterteil, der die Zinkelektrode enthält, auf der Innenseite mit Kupfer zu beschichten, während auf der nach außen weisenden Seite eine Nickelbeschichtung vorgenommen wird. Solche Trimetalldeckel sind beispielsweise der JP 61061364 A1 zu entnehmen. Die aus Kupfer bestehende Innenschicht kann dabei, um die Wasserstoffüberspannung zu erhöhen und die Wasserstoffentwicklung trotz geringen Quecksilbergehalts der Zinkelektrode zu verringern, beispielsweise mit Indium legiert oder mit einer Indiumschicht überzogen sein. Ein spezielles Problem bei derartigen Knopfzellen liegt darin, dass der alkalische, stark kriechende Elektrolyt mit der Zeit in den Spalt zwischen dem die negative Elektrode aufnehmenden Deckelhalbteil und der Dichtung einsickert. In diesem Fall berührt der Elektrolyt auch die Schnittkante des Deckels und die Außenseite, die mit Nickel beschichtet ist, und dies führt zu einer unerwünschten Wasserstoffentwicklung. Man hat zwar versucht, das Eindringen des alkalischen Elektrolyten in diesen Bereich durch Anwendung von Klebemassen im Dichtungsbereich zu verhindern, hat damit aber keine reproduzierbaren und zuverlässigen Ergebnisse erzielt.

Der Erfindung liegt daher die Aufgabe zugrunde, Maßnahmen anzugeben, durch welche die Gasungsneigung bei solchen Knopfzellen mit alkalischem Elektrolyten weiter verhindert wird.

Diese Aufgabe wird bei einer Knopfzelle der eingangs genannten Art durch die kennzeichnenden Merkmale der Ansprüche 1 und 2 gelöst. In den Unteransprüchen sind vorteilhafte Ausgestaltungen der Erfindung angegeben.

Bei der erfindungsgemäßen Knopfzelle ist zumindest die Außenfläche/Außenseite des Zellendeckels, der die negative Zink/Gelelektrode enthält, mit einer nickelfreien Cu/Sn-Legierung beschichtet. Es ist vorteilhaft, die gleiche Beschichtung auch auf der Innenseite/Innenfläche des Deckels vorzunehmen und gegebenenfalls auch den Becher als weiteres Halbteil der Zelle auf seiner Innenseite und gegebenenfalls auch auf seiner Außenseite mit diesem Material zu beschichten.

Die Beschichtung besteht vorzugsweise aus einer Cu/Sn-Legierung, die 20 % bis 90% Cu und Sn sowie Zn enthält.

Für die Beschichtung geeignet sind insbesondere Legierungen, die 50 % bis 60 % Cu und 40 % % bis 50 % Sn enthalten, oder Legierungen aus 75 % bis 85 % Cu und 15 % bis 25 % Sn. Weiterhin liegen Legierungen aus 50 % bis 60 % Cu, 25 % bis 35 % Sn, Rest Zn, beispielsweise 15 % Zn oder aus 75 % bis 85 % Cu, 8% bis 12 % Sn, Rest Zn, beispielsweise 5 % Zn, im Rahmen der Erfindung.

Diese Legierungen besitzen eine ausreichende Härte, ähnlich wie Nickelüberzüge, und Korrosionsbeständigkeit und geringe Übergangswiderstände. Sie zeichnen sich aus durch eine feinkristalline homogene Struktur.

Die Dicke von Zellenbecher und Zellendeckel liegt bei ca. 120 µm, die Dicke der Außenbeschichtung und der gegebenenfalls vorgenommenen Innenbeschichtung liegt bei 0,05 µm bis 10 µm, vorzugsweise bei 3 µm bis 6 µm.

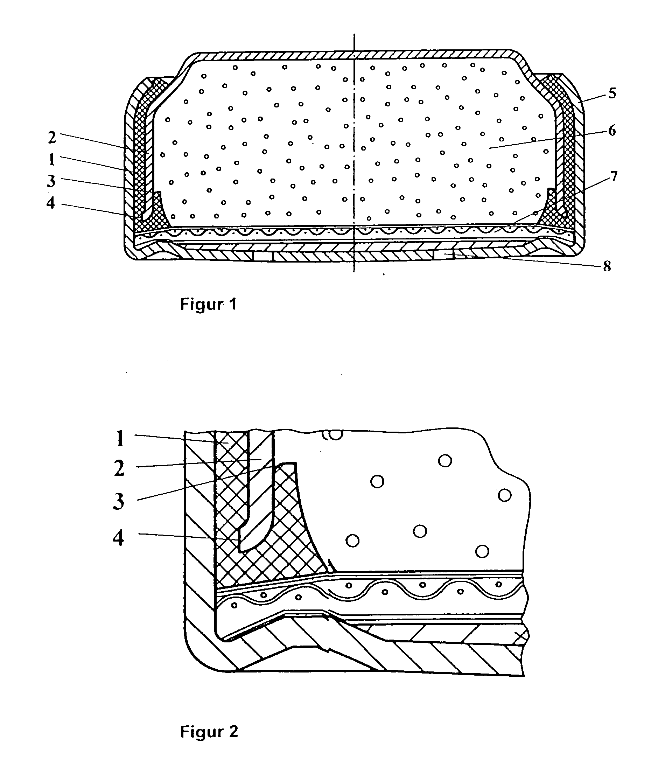

Im Folgenden ist der Gegenstand der Erfindung anhand der Figuren näher erläutert. Figur 1 stellt eine übliche alkalische Knopfzelle dar, die einen Deckel 2 und einen Behälter 5 besitzt. Im Deckelhalbteil 2 ist ein Zinkgel 6, wobei vorzugsweise Hg-freies Zink verwendet wird, als negative aktive Masse angeordnet, welches den alkalischen Elektrolyten enthält. Deckel 2 und Zellenbecher 5 sind durch eine Dichtung 1 gegeneinander isoliert und dicht nach außen verschlossen. Im Becherhalbteil 5 befindet sich bei der hier dargestellten Zink/Luftzelle eine Gasdiffusionselektrode 7. Der Zellenbecher 5 enthält Lufteintrittsöffnungen 8. Figur 2 zeigt einen vergrößerten Ausschnitt aus Figur1.

Wie bereits weiter oben erläutert, kann während der Lebensdauer der Zelle alkalischer Elektrolyt in den Dichtungsbereich eindringen und dabei über den Spalt 3 an die Schnittkante 4 des Zellendeckels gelangen und mit dem üblichen Nickelüberzug des Deckelhalbteils 2 in Verbindung kommen, was zu einer Gasentwicklung führt. Durch Versuche hat sich gezeigt, dass bei Vergleich von Zink/Luftbatterien mit herkömmlichen Deckeln aus Trimetall im Vergleich zu Zink/Luftzellen mit einem Deckel, der mit einer Kupfer/Zinn-Legierung beschichtet war, deutliche Unterschiede in der Gasentwicklung auftreten.
Beispielsweise wurden derartige Zellen zum Vergleich bei einer Temperatur von 60 °C für einen Monat gelagert und danach wurde die Wasserstoffentwicklung, gemessen. Bei erfindungsgemäßen Zellen traten nach dieser Lagerung keine Blasen im Bereich der Luftöffnungen 8 auf, die zum besseren Erkennen möglicherweise vorhandener Blasen durch eine halbtransparente aufgeklebte Folie verschlossen waren.

Durch die erfindungsgemäße nickelfreie Beschichtung, zumindest der Außenseite des Deckels der Knopfzelle, wird einerseits erreicht, dass die Wasserstoffentwicklung weitgehend zurückgedrängt wird. Zusätzlich ergibt sich der erhebliche Vorteil, dass die Zellen eine nickelfreie Oberfläche besitzen, sodass sich durch Korrosion keine Nickelionen aus der Oberfläche der Halbteile herauslösen können, die zu allergischen Reaktionen auf der Haut von Benutzern führen können.

## Patentansprüche

1. Galvanisches Element mit alkalischem Elektrolyten und negativer Zinkelektrode in einem Gehäuse in Form einer Knopfzelle, **dadurch gekennzeichnet, dass** zumindest die Außenfläche des Zellendeckels (2) mit einer nickelfreien Cu/Sn-Legierung beschichtet ist.

2. Galvanisches Element mit alkalischem Elektrolyten und negativer Zinkelektrode in einem Gehäuse in Form einer Knopfzelle, **dadurch gekennzeichnet, dass** zumindest die Außenfläche des Zellendeckels (2) mit einer nickelfreien Cu/Sn/Zn-Legierung beschichtet ist.

3. Galvanisches Element nach Anspruch 1 oder 2, **dadurch gekennzeichnet, dass** die Legierung 20 % bis 90 % Cu enthält.

4. Galvanisches Element nach Anspruch 1, **dadurch gekennzeichnet, dass** die Legierung 50% bis 60 % Cu, Rest Sn, enthält.

5. Galvanisches Element nach Anspruch 1, **dadurch gekennzeichnet, dass** die Legierung 75 % bis 85 % Cu, Rest Sn, enthält.

6. Galvanisches Element nach Anspruch 2, **dadurch gekennzeichnet, dass** die Legierung 50 % bis 60 % Cu, 25 % bis 35 % Sn, Rest Zn, enthält.

7. Galvanisches Element nach Anspruch 2, **dadurch gekennzeichnet, dass** die Legierung 75 % bis 85 % Cu, 8 % bis 12 % Sn, Rest Zn, enthält.

8. Galvanisches Element nach einem der Ansprüche 1 bis 7, **dadurch gekennzeichnet, dass** Außen- und Innenseite des Zellendeckels (2) mit der Legierung beschichtet sind.

9. Galvanisches Element nach einem der Ansprüche 1 bis 8, **dadurch gekennzeichnet, dass** neben dem Zellendeckel (2) auch die Innen- und/oder Außenseiten des Zellenbechers (5) mit der Legierung beschichtet sind.

10. Galvanisches Element nach einem der Ansprüche 1 bis 9, **dadurch gekennzeichnet, dass** die Dicke der Beschichtung zwischen 0,05 µm und 10 µm, vorzugsweise zwischen 3 µm und 6 µm, liegt.
